# EUROPEAN PATENT APPLICATION

(11) **EP 1 555 825 A1**
(43) Date of publication of application: **20.07.2005**
(21) Application number: 03754356.8
(22) Date of filing: 22.10.2003
(51) Int. Cl.: H04N 7/173

(54) **MICROWAVE INTERACTIVE DISTRIBUTION INFORMATION SYSTEM (MIDIS)**

(30) Priority: 23.10.2002 UA 02108426
(71) Applicant: Obshchestvo s ogranichennoi otvetstvennostyu "Institut Electroniki i Svyazi", Kiev 04210 (UA)
(72) Inventor: NARYTNIK, Teodor Nikolaevich, Kiev, 03170 (UA); VOITENKO, Alexandr Grigorievich, Kiev, 03134 (UA); GOLOVAKHA, Alexandr Ivanovich, Kiev, 04215 (UA); YEVDOKIMOV, Vladimir Vitalievich, Kiev, 04210 (UA); ILCHENKO, Mikhail Efimovich, Kiev, 01021 (UA); KAZIMIRENKO, Valeriy Yakovlevich, Kiev, 03134 (UA); MAKAROV, Alexandr Georgievich, Kiev, 03148 (UA); ORLOV, Anatoliy Timofeyevich, Kiev, 03112 (UA); FAINGOLD, Alexandr Mikhailovich, Kiev, 03049 (UA)
(74) Representative: Benatov, Emil Gabriel, Dr.
(86) International application number: PCT/UA2003/000042
(87) International publication number: WO 2004/039076

(57) **Abstract**

The inventive microwave interactive distribution information system (MIDIS) comprises a central station (1) provided with a directional antenna (7), a head-end receiving station of a return channel (15) and a plurality user stations (23) each of them being provided with an aerial (27) which is connected to the transmitter of the return channel. In addition, the central station (1) comprises at least one data transmitting channel of a forward channel (2) which comprises the driver (3) thereof, at least one transmitting channel of an analog broadcasting (8), the transmitting channel of a digital broadcasting (11), receiving sector antennas of the return channel (18) the number of which is defined by the overlapping azimuth directional characteristics thereof, said overlap can be equal to 360 DEG , at least one access server of the return channel (20) which is connected to an information service centre (21) consisting of service servers incorporated in a local computer network connected to a router (22) and to at least one access server of the return channel (20). In addition, each user station (23) comprises a user station server connected to a computer (33), a digital-to-analog tuner (31) and television receiver (32).

## Description

### Field of the invention

The mentioned invention is related to the communication technology that provides for transmitting and receiving information through radio connection channels, particularly, to a microwave interactive distribution information system.

### Background of the invention

At present, the interest to provide users with an access to information services of application level is constantly growing. Considerable part of information and communication services can be received by means of application services through the Internet, the global computer network. Internet technologies permit also to organize access to a number of other services: telephony, video conference connection, video on demand etc. All existing Internet-access systems whose technologies often supplement each other form an extensive and multispeed network. At the same time, old narrow-band technologies, which utilize the generally used telephone networks and wireless technologies IEEE82.11x and Bluetooth (standard IEEE 802.15.1), are more and more giving way to new ultra wide-band access technologies (Ultra Wide Band ― UWD) and wide-band systems of broadcast access, so called Multipoint Distribution Service (MDS), including wide-band systems of broadcast access based on microwave integral TV and radio information systems (further the "MITRIS") of different modifications.

The significant size of the MITRIS service areas makes it possible to provide service to spatially remote users within a radius of up to 50 - 60 km. The main advantages of the wireless systems of access to communication and information services as compared to the other Internet-excess systems are the following:
- high speed of system development;
- larger coverage of users with minimal inputs for communications;
- possibility for subscribers to have access of up to tens Mbites per second in the straight channel and of up to 2 Mbite/sec in the backward channel;
- simple integration on the radio channels by means of wireless communication, both ground-based and satellite;
- large informational capacity;
- possibility for gradual increase of the number of subscribers (T.M. Narytnik, V.P. Babak, M.S. Ilchenko, S.O. Kravchuk. Microwave technologies in the television communication systems, Kiev, "Technics", 2000, page 167).

A microwave integral television and radio information system is known from UA-2002042956-A (patent of Ukraine Nº 51495) and PCT/UA02/00038 which provides transmitting and receiving data through radio connection channels and which from a technical point of view is the closest to the proposed technical solution.

The known MITRIS-INT system consists of a head-end and of at least one subscriber users station, wherein the head-end station contains at least one transmitting-receiving bole that includes a transmitter of a direct channel, the input of which is connected to the nondirectional antenna through the duplexer, and backward channel head-end receiving station, that includes the step-down converter of backward channel, the output of which is connected to the input of the division block with number of outputs from 1 to N, which are connected to the inputs of backward channel demodulators, and the subscriber users station contains antenna which is connected through the duplexer to the transmitter of backward channel (step-up converter), the input of which is connected to the modulator of backward channel and step-down converter, the output of which is connected to the demodulator of straight channel.

The configuration of this known system overcomes the problem of the duplex channel accordance to subscribers for accessing the dispersed databases (access to the Internet resources etc.) through the network ascending (from the subscriber to the information services) and descending (from the information services to the subscriber) communication channels without any other communication facilities.

Among disadvantages of the known MITRIS-INT one can name the following:
- the "adulteration" of correctional information is realized on the other network information server;
- the straight channel is formed by means of other networks' units;
- possibility for providing with services of only lower levels of open systems interaction reference model (OSI RM), i.e. transport network services;
- the number of subscriber channels is restricted by bandwidth of the backward channel receiver.

All these factors make the MITRIS-INT system relatively expensive and prohibit users from sufficiently high quality access to information resources.

### Summary of the invention

The object of the present invention is to provide, on the basis of the known MITRIS-INT system, a distributive system of information services through the network of ascending and descending communication channels of advanced capacity using information services providing center which is a part of the central station, and that would provide relatively inexpensive and qualitative access for users to information resources and would also permit to expand the number of subscriber channels, i.e. to enable the "adulteration" of correctional information, straight channel forming, providing with application level services of OSI RM by means of the system.

In the proposed solution the object is achieved according to the mentioned invention of the multi-purpose multimedia distributive MIDIS system by means of the microwave integrate information system, which consists of a central and of at least one subscriber users station, wherein the central station contains a nondirectional antenna, a backward channel head-end receiving station, which includes at least one backward channel step-down converter, the output of which is connected to the input of division block that has from 1 to N outputs, connected to backward channel demodulators inputs; and the subscriber users station contains an antenna, which is connected to the backward channel transmitter (step-up converter) through the duplexer; the transmitter input is connected to the backward channel modulator and to the step-down converter, the output of which is connected to the straight channel modulator; according to the invention the central station is associated with at least one data transmitting trunk of a straight channel, which includes a straight channel former, the output of which through the modulator is connected to the straight channel transmitter, which is connected to the nondirectional antenna through the adder; with at least one analogue broadcasting transmitting trunk, that contains analogue signal modulator, the output of which is connected to the input of an/the analogue channel transmitter, which is connected to the central station nondirectional antenna through the adder while the input is an analogue TV video signal input; with the digital broadcasting transmitting trunk, which contains a digital TV signal coder, the input of which is a digital broadcasting video signal input while the output is connected to the first digital broadcasting channel transmitter output is connected to the central station nondirectional antenna through the adder; and also multichannel converter to the output of which digital TV radio signal is brought while the output is connected to the second input of the digital broadcasting channel transmitter; the backward channel head-end receiving station of the central station is associated with backward channel receiving sector antennas, the outputs of which are connected to the inputs of backward channel step-down converters, the outputs of backward channel demodulators are connected to at least one access server of the return channel, to the information services providing center, to which the router is connected, and the subscriber users station is associated with the subscriber users station server, connected to the computer, digital-analogue tuner and TV receiver.

The information services providing center consists mainly of services servers united into a local network, which is connected to the router and to at least one backward channel access server.

Furthermore, the number of receiving sector antennas is determined by their azimuth pattern, wherein their azimuth overlap may reach 360 °.

As compared to the known MITRIS-INT system the currently proposed MIDIS system includes additionally introduced into the central station:
- at least one data transmitting trunk of a straight channel, which contains straight channel former, that provides conversion of the data stream from information services providing system of the Ethernet format into the DVB-S format; straight channel modulator, which provides modulation of the carrier by traffic DVB-stream and which transmits provided services and correctional data towards the information channel subscriber users stations;
- can obtain at least one analogue broadcasting transmitting trunk that includes analogue channel modulator, the input of which is connected to the input of analogue channel transmitter;
- digital broadcasting transmitting trunk which transmits broadcasting services towards subscriber users stations in digital format and which contains a digital TV signal coder, that provides the conversion of the analogue TV signal or radio broadcasting signal into a digital form; digital channel modulator which provides modulation of the carrier by a TV analogue signal; digital broadcasting channel transmitter, that transmits the digital broadcasting signal towards subscriber users stations; and channel converter, which transforms the input radio signal frequency into the transmitting frequency;
- receiving sector antennas of the backward channel head-end receiving station of the central station which increases the number of subscriber users stations due to the backward channel frequency reuse;
- access server of the return channel, which provides the return channel access to the system information resources;
- information services providing center, which provides information services of application level and consists of service servers united in the local network and connected to the router port which provides the Internet access and executes data routing to the direct channel former that executes the encapsulation of network level packages into the traffic stream (shot).

The utilization of the network level log also permits to introduce into the common data stream messages with simultaneous time correction of the subscriber users station modulator connection to communication lines.

The proposed decision enables the application level services to form a straight channel by regular means of the system and to "adulterate" correctional data into the common data stream and thus to remove first three mentioned defects of the known MITRIS-INT system.

Thus, the declared technical solution achieves the objects which are the following:
- the correctional data "adulteration", the straight channel forming and the providing of the OSI RM application level services are attained by means of the associated MIDIS system facilities;
- the number of subscriber channels increases due to the reuse of the straight channel frequencies, which is attained by using the receiving sector of backward channel;
- all named factors in aggregate provide a relatively cheap and qualitative users access to the information resources.

### Brief description of the drawings

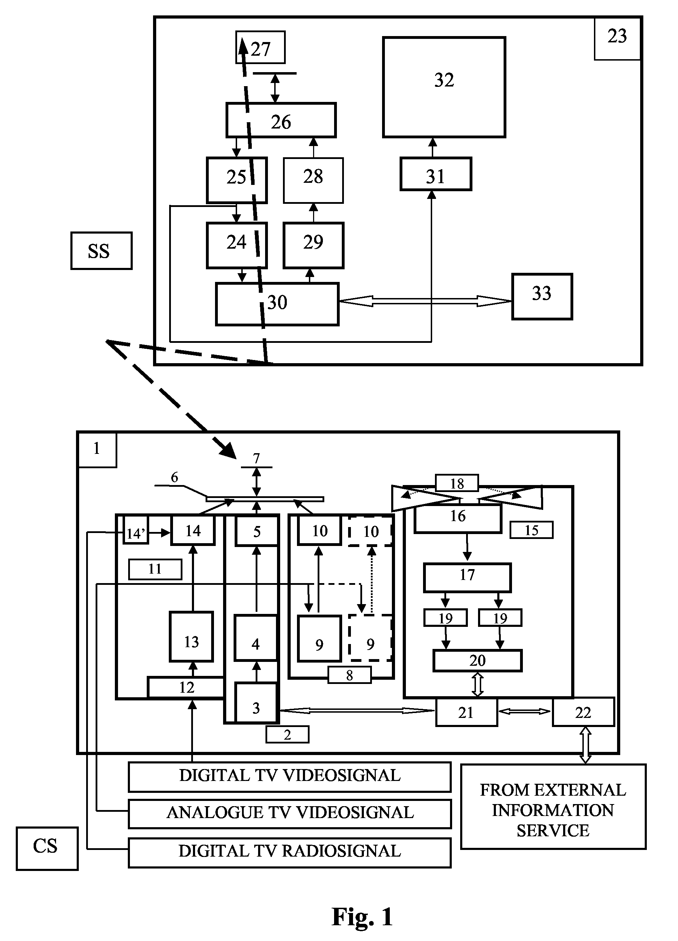

A more detailed description of the invention is given herein below by means of an example of a preferred embodiment with reference to the fig. 1 of the enclosed drawing, which represents the structural diagram of the central and subscriber users stations of the MIDIS system according to the invention.

### Preferred embodiment for carrying out the invention

As it is shown on fig. **1,** the multi-purpose multi-media distributive MIDIS system consists of a central station (CS) **1,** which contains a data transmitting trunk of a straight channel (DTP) **2,** which includes straight channel former (SCF) **3,** the output of which through the straight channel modulator (SCM) **4** is connected to the straight channel transmitter **5,** which through the adder **6** is connected to the nondirectional antenna **7;** and also an analogue broadcasting transmitting trunk (ABB) **8,** which includes analogue signal modulators (ASM) **9,** the outputs of which are connected to the input of analogue channel transmitters (ACT) **10,** which through the adder **6** are connected to the nondirectional antenna **7,** while the ASM **9** inputs are connected to the analogue TV video signal; digital broadcasting transmitting trunk (DBB) **11,** which includes a coder **12** of the digital TV signal, a digital channel modulator (DCM) **13,** a digital broadcasting channel transmitter (DBT) **14,** the output of which through the adder **6** is connected to the nondirectional antenna **7,** a channel converter **14',** the output of which is connected to the DBT **14** input; backward channel head-end receiving station (BCRS) **15,** that includes a step-down converter **16,** the output of which is connected to the input of the division block **17** while the input is connected to the output of one of the receiving sector antennas **18,** the outputs of the division block **17** are connected to the backward channel demodulators **19,** which are connected to at least one access server of the return channel (BCAS) **20;** information services providing center **21,** which consists of information and communication services servers, united in the local computer network with the access to the Ethernet interface and connected to the router **22,** which can be connected to the outside sources of information services.

As it is shown on fig. 1, the subscriber users station (SS) **23** contains the straight channel demodulator **24,** the input of which is connected to output of the straight channel step-down converter **25,** the input of which through the duplexer **26** is connected to the antenna **27;** the backward channel transmitter (the step-up converter) **28,** the output of which is connected to the antenna **27** through the duplexer **26** while the input is connected to the backward channel modulator **29;** SS **23** server **30,** connected to both the output of the straight channel demodulator and the input of the backward channel modulator **29.** The digital-analogue tuner **31,** the output of which is connected to the input of the subscriber TV receiver **32,** is connected to the output of the straight channel demodulator **24.** The SS **23** computer **33** is also connected to the server **30.**

### The proposed MIDIS system works in the following way.

Data stream proceeds from the subscriber's computer **33** through the interface of the PCI (Peripheral Component Interconnect) server **30** of the subscriber to the input of the backward channel modulator **29** and further, to the input of the backward channel transmitter (step-up converter) **28,** through the duplexer **26** and the antenna **27** over the radio channel is transmitted through the receiving sector antenna **18** to the receiving path of the backward channel (step-down converter) **16** and further to the input of the division block **17** of CS **1** BCRS **15.** The division block **17** converts the signal frequency into the demodulation frequency, singles out channels and directs them to separate ports, to which the backward channel demodulators **19** are connected. The digital stream in the backward channel demodulators **19** is updated, the timeliness of the signal arrival from SS **23** is calculated, a corrective message is generated, whereupon the request stream along with the corrective message is directed by BCAS **20** to the information services providing center **21.** The data stream is applied to the router **22** port from services servers which are connected to the information services providing center **21.**

Thus, the corrective sequence (CS) is brought into the common data stream of network level (IP-packages) directed to the SCF **3,** which is connected through the digital interface to the information services providing center **21.** The average CS speed reaches a value of several kilobits per second whereas the speed in the descending (straight) channel may reach tens of megabits per second.

The increase of the total straight channel carrying capacity is reached due to the increase of the number of transmitting trunks.

The increase of the total backward channel carrying capacity is reached by reusing the information signal frequencies, at the same time the number of receiving sector antennas of the backward channel is determined by their azimuth pattern, wherein the azimuth overlap may reach 360 °.

For example, the fourfold reuse of the mentioned frequencies is realized by means of **12** receiving sector antennas with a beam width of 30°, of half-capacity radiation level.

Thus, the reuse of 0,1―0,01 % of the descending (straight) data channel in order to adjust the stream doesn't actually influence the data quality and doesn't make the price of the service higher due to the price of both the service channel and the additional equipment, since the reception is carried out by means that are used in the existing descending (straight) channel. The package division for different purposes is executed on the computer **33** of the SS **23** by means of the corresponding addressing.

The received common data stream is brought to the SCM **4** and then in the radio signal form is directed towards the transmitter **5** of the CS **1** straight channel and radiated into the service area of the CS **1** nondirectional antenna **7** system, which is connected to the output of the straight channel transmitter **5** through the adder **6.** The nondirectional antenna **7** radiates IP-packages into the service area, for example, in the DVB-S format (Digital Video Broadcasting ― Satellite), which are then received by the SS **23** equipped with the receiving cards of the DVB (Digital Video Broadcasting)-stream with the speed of up to 6-8 Mbits per second. Signals in the SS **23** are directed through the antenna **27** towards the step-down converter **25** of the straight channel, from the output of which they're brought into the straight channel demodulator **24.** In the straight channel demodulator **24** the straight channel digital stream is updated and delivered onto the subscriber server **30.** Here the stream is divided in the corrective and data streams.

The data stream is used for displaying the received data on the screen of the computer **33** and the corrective stream is used for correcting the cycle start time (time slot).

The data stream can be radiated into the service area in the DVB-S format and can be received by SS, equipped DVB-stream receivers at the speed of up to 100 Mbits per second while the user-addressed information is singled out at the speed of 6-8 Mbits per second if the DVB card is used as a signal receiver.

The video signal in the analogue or digital form is brought to the input of the coder **12** which provides signal coding (compression) and traffic stream forming. The formed traffic stream modulates the carrier and the signal amplifies in the channel format and it's radiated towards the service area. The signal is multiplexing while the multi-channel stream is formed and the modulation is executed by the resultant traffic stream.

The video and audio signal are directed towards the input of the analogue FM-modulator while providing analogue TV-broadcasting services, it is then amplified and radiated to the service area.

Thus, the proposed MIDIS system represents an information services system that works through the network of ascending and descending communication channels of increased capacity using a information services providing center, which is a part of the central station, and that allows to provide a relatively cheap qualitative users access to information resources and also allows to increase considerably the number of subscriber channels, i.e. enables the "adulteration" of corrective information, the straight channel forming, and provides OSI RM application level services by means of the system.

It should be understood that the invention is described by means of a particular embodiment, which does not limit the invention in any way, and the persons skilled in the art can make various modifications and alterations to the invention, which do not step out of the scope of the invention defined in the attached claims.

### Industrial applicability of the invention

The presented invention may be used for providing an interactive data exchange between facilities of central and subscriber users stations, for providing subscriber users stations with a number of communication services (for example, Internet services, packet telephony, video connection, video on demand etc.). It may also be used as a subscriber access facility in commercial networks providing subscribers with different kinds of services, in the distance education networks, in the monitoring and administration networks, in the security networks.

## Claims

1. Integrated microwave interactive distributive information system comprising a central station (1) and at least one subscriber users station (23), wherein the central station (1) contains a non-directional antenna (7), the backward channel head-end receiving station (15), which contains a step-down converter of backward channel (16), the output of which is connected to the division block (17), which has from 1 to N outputs, connected to the input of backward channel demodulators (19); the subscriber users station (23) contains an antenna (27) which through the duplexer (26) is connected to the transmitter of the backward channel (step-up converter) (28), the input of which is connected to the backward channel modulator (29) and the converter (25), the output of which is connected to the straight channel demodulator (24) ***characterized* in that** the central station (1) also comprises at least one data transmitting trunk of a straight channel (2), which includes the straight channel former (3), the output of which through the straight channel modulator (4)is connected to the straight channel transmitter (5), connected through the adder (6) to the non-directional antenna (7) of the central station (1), at least one analogue broadcasting transmitting trunk (8), which includes analogue signal modulator (9), the output of which is connected to the input of analogue channel transmitter (10), connected through the adder (6) to the non-directional antenna (7) of the central station (1), while the output is at the same time the input of an analogue TV video signal; the digital broadcasting transmitting trunk (11), which includes a digital TV signal coder (12), the input of which is at the same time the input of the digital broadcasting video signal while the output through the digital channel modulator (13) is connected to the first input of the digital broadcasting channel transmitter (14), the output of which through the adder (6) is connected to the non-directional antenna (7) of the central station (1), and also a channel converter (14'), to the input of which the digital TV radio signal is brought, while the output is connected to the second input of the transmitter of digital broadcasting channel (14); the backward channel head-end receiving station of the central station (1) contains receiving sector antennas of backward channel (18), the outputs of which are connected to the inputs of the backward channel step-down converters (16); the outputs of the backward channel demodulators (19) are connected to at least one backward channel access server (20), connected to the information services providing center (21), to which the router (22) is connected and the subscriber users station (23) contains a subscriber users station server (30), connected to the computer (33), a digital-analogue tuner (31) and a TV-receiver (32).

2. The system according to claim 1 ***characterized in that*** the information services providing center (21) consists mostly of services servers, united in a local network, which is connected to the router (22) and to at least one backward channel access server (20).

3. The system according to claim 1 ***characterized in that*** the number of the receiving sector antennas (18) is determined by their azimuth pattern, wherein their azimuth overlap may reach 360 °.

## Amended claims

### Amended claims under Art. 19.1 PCT

**1.** Integrated microwave interactive distributive information system comprising a central station (1) and at least one subscriber users station (23), wherein the central station (1) contains a non-directional antenna (7), the backward channel head-end receiving station (15), which contains at least one step-down converter of backward channel (16), the output of which is connected to the input of the division block (17), which has from 1 to N outputs, connected to inputs of backward channel demodulators (19); the subscriber users station (23) contains an antenna (27) which through the duplexer (26) is connected to the transmitter of the backward channel (step-up converter) (28), the input of which is connected to the backward channel modulator block (29) and the step-down converter (25), the output of which is connected to the straight channel demodulator (24) ***characterized in that*** the central station (1) also comprises: at least one data transmitting trunk of a straight channel (2), which includes the straight channel former (3), the output of which through the straight channel modulator (4)is connected to the straight channel transmitter (5), connected through the adder (6) to the non-directional antenna (7) of the central station (1), at least one analogue broadcasting transmitting trunk (8), which includes an analogue signal modulator (9), the output of which is connected to the input of analogue channel transmitter (10), connected through the adder (6) to the non-directional antenna (7) of the central station (1), while the input is at the same time the input of an analogue TV video signal; the digital broadcasting transmitting trunk (11), which includes a digital TV signal coder (12), the input of which is at the same time the input of the digital broadcasting video signal while the output through the digital broadcasting channel modulator (13) is connected to the first input of the digital broadcasting channel transmitter (14), the output of which through the adder (6) is connected to the non-directional antenna (7) of the central station (1), and also a channel converter (14'), to the input of which the digital TV radio signal is brought, while the output is connected to the second input of the transmitter of the digital broadcasting channel (14); the backward channel head-end receiving station of the central station (1) contains receiving sector antennas of backward channel (18), the outputs of which are connected to the inputs of the backward channel step-down converters (16); the outputs of the backward channel demodulators (19) are connected to at least one backward channel access server (20), connected to the information services providing center (21), to which the router (22) is connected and the subscriber users station (23) contains a subscriber users station server (30), connected to the computer (33), to the straight channel demodulator (24) and backward channel modulator block (29), a digital-analogue tuner (31) and a TV-receiver (32), the input of which through the digital-analogue tuner (31) is connected to the output of the step-down converter (25).

**2.** The system according to claim 1 ***characterized in that*** the information services providing center (21) consists of services servers, united in a local network, which is connected to the router (22) and to at least one backward channel access server (20).

**3.** The system according to claim 1 ***characterized in that*** the number of the receiving sector antennas (18) depends on their azimuth pattern, and they have common azimuth overlap not less than 360 °.
